# DEMANDE DE BREVET EUROPEEN

(11) **EP 1 665 965 A1**
(43) Date de publication de la demande: **07.06.2006**
(21) Numéro de dépôt: 05356205.4
(22) Date de dépôt: 22.11.2005
(51) Int. Cl.: A47J 19/02

(54) **Dispositf de pressage rotatif à ailettes**

(30) Priorité: 03.12.2004 FR 0412835; 01.02.2005 FR 0500987
(71) Demandeur: SEB S.A., 69130 Ecully (FR)
(72) Inventeur: Perrier, Matthieu, 65000 Tarbes (FR); Rouches, Alexandre, 65310 Horgues (FR); Dominquez, Augustin, 65000 Tarbes (FR); Guillemin, Christophe, 65100 Lourdes (FR)
(74) Mandataire: Kiehl, Hubert

(57) **Abrégé**

- L'invention concerne un dispositif de pressage rotatif pour fruits, comportant un réceptacle (10), deux ailettes (61, 62) prévues pour être entraînées en rotation dans le réceptacle (10), et un cône de pressage (7) prévu pour être disposé au dessus des ailettes (61, 62) et pour être entraîné en rotation, l'une au moins des ailettes (61, 62) comportant un bord latéral inférieur (65, 66) prolongé par une face supérieure (73, 74) s'élevant à partir dudit bord latéral inférieur (65, 66).
- Conformément à l'invention, au moins l'autre ailette (61, 62) comporte un bord latéral supérieur (63, 64) prolongé par une face inférieure (67, 68) s'abaissant à partir dudit bord latéral supérieur (63, 64), le bord latéral inférieur (65, 66) et le bord latéral supérieur (63, 64) étant susceptibles de former des bords d'attaque lors d'une rotation des ailettes (61, 62).

## Description

La présente invention concerne le domaine technique des presse-fruits à cône de pressage rotatif, dans lesquels le jus d'un demi-fruit est extrait par un cône de pressage entraîné en rotation.

La présente invention concerne les appareils électriques ou non prévus pour le pressage des fruits ainsi que les accessoires prévus pour être utilisés avec un appareil électroménager de préparation culinaire tel que par exemple un robot ménager multifonctions.

Il est connu du document FR 1 323 666 un presse-fruits électrique comportant un cône de pressage entraîné en rotation dans un réceptacle formant un tamis filtrant. Deux ailettes formant une rampe sont disposées sous le cône de pressage. Le bord avant de chaque ailette est écarté de la surface du tamis filtrant. Le bord arrière de chaque ailette est adjacent à la surface du tamis filtrant ou même appuie légèrement sur la surface du tamis filtrant. Le bord arrière de chaque ailette présente un certain nombre de fentes, formant ainsi des languettes ayant une certaine souplesse. Les ailettes contribuent à extraire le jus de la pulpe des fruits. Les languettes peuvent se soulever lors du passage sur un pépin. Les ailettes peuvent être solidaires ou non du cône de pressage.

Le document ES 1 036 870 U divulgue un accessoire presse-fruits pour robot ménager, dans lequel le cône de pressage comporte deux ailettes inclinées. La partie inférieure des ailettes est agencée à proximité du fond d'un tamis filtrant.

Un but de la présente invention est d'améliorer l'extraction du jus dans un presse-fruits à cône de pressage rotatif.

Un autre but de la présente invention est d'améliorer l'extraction du jus d'agrume à partir de la pulpe dans un presse-fruits à cône de pressage rotatif.

Un autre but de la présente invention est d'améliorer l'extraction du jus de tomate à partir de la pulpe dans un presse-fruits à cône de pressage rotatif.

Les buts de l'invention sont atteints avec un dispositif de pressage rotatif pour fruits, comportant un réceptacle, deux ailettes prévues pour être entraînées en rotation dans le réceptacle, et un cône de pressage prévu pour être disposé au dessus des ailettes et pour être entraîné en rotation, l'une au moins des ailettes comportant un bord latéral inférieur prolongé par une face supérieure s'élevant à partir dudit bord latéral inférieur, du fait qu'au moins l'autre ailette comporte un bord latéral supérieur prolongé par une face inférieure s'abaissant à partir dudit bord latéral supérieur, et que le bord latéral inférieur et le bord latéral supérieur sont susceptibles de former ensemble des bords d'attaque lors d'une rotation des ailettes. Cette disposition permet d'améliorer notoirement l'extraction du jus en assurant à la fois un pressage de la pulpe avec l'ailette présentant un bord latéral supérieur disposé en avant par rapport au sens de rotation, pour extraire du jus à partir de la pulpe, ainsi qu'un brassage efficace de la pulpe avec l'autre ailette présentant un bord latéral inférieur en avant par rapport au sens de rotation, facilitant l'écoulement du jus hors de la pulpe pressée.

Avantageusement, les ailettes sont inclinées transversalement de manière opposée. Chaque ailette peut présenter deux inclinaisons transversales opposées, ou les inclinaisons transversales des ailettes peuvent présenter des sens opposés l'une par rapport à l'autre.

Avantageusement alors les ailettes présentent une symétrie miroir. Cette disposition améliore aussi le fonctionnement lorsque les ailettes sont susceptibles d'être entraînées en rotation dans les deux sens. Cette symétrie miroir peut concerner chacune des ailettes par rapport à elle-même ou par rapport à l'autre ailette.

Avantageusement, les ailettes sont disposées de manière opposée. Cette disposition améliore le fonctionnement lorsque les ailettes sont susceptibles d'être entraînées en rotation dans les deux sens.

Selon une forme de réalisation avantageuse, chacune des ailettes présente un bord latéral supérieur et un bord latéral inférieur. Selon le sens de rotation, chacune des ailettes peut assurer un pressage de la pulpe ou un brassage de la pulpe. Cette disposition permet de réduire la taille des ailettes.

Avantageusement alors, les ailettes comportent une face inférieure présentant une inclinaison augmentant du bord latéral supérieur vers le bord latéral inférieur. En d'autres termes, la pente de la face inférieure devient plus importante à proximité du récipient lorsque les ailettes sont en place dans le récipient. Cette disposition permet de mieux extraire le jus de la pulpe, lorsque le bord latéral supérieur est placé en position amont et le bord latéral inférieur est placé en position aval. La pulpe reposant sur le fond du réceptacle est accumulée sous l'ailette. L'augmentation de l'inclinaison de la face inférieure induit une augmentation de la compression de la pulpe, qui favorise l'éclatement des cellules de la pulpe et le recueil d'une part plus importante de nutriments restant usuellement dans la pulpe non pressée. De plus cette disposition permet de limiter les risques de coincement de pépins sous l'ailette, grâce à la pente plus importante. Cette disposition peut constituer une invention en tant que telle pour une ailette appartenant à un dispositif de pressage rotatif pour fruits, indépendamment de la présence d'une deuxième ailette.

La face inférieure d'une ailette présentant un bord latéral supérieur peut également présenter une inclinaison augmentant dudit bord latéral supérieur vers une partie inférieure de ladite ailette. Cette disposition peut également constituer une invention en tant que telle pour une ailette appartenant à un dispositif de pressage rotatif pour fruits, indépendamment de la présence d'une deuxième ailette.

Avantageusement encore, le bord latéral inférieur est relevé en direction de la périphérie. Cette disposition permet de faciliter l'évacuation des pépins vers l'extérieur lorsque l'ailette tourne dans le sens correspondant au pressage de la pulpe. Cette disposition peut également être utilisée en combinaison avec la disposition précédente, indépendamment de la présence d'une deuxième ailette.

Avantageusement encore la distance entre le bord latéral inférieur et le fond du réceptacle est comprise entre 1,5 et 2,5 mm. Cette disposition permet d'éviter le coincement sous les ailettes des petits pépins tels que par exemple les pépins de tomate, tout en assurant un pressage suffisant de la pulpe. Cette disposition peut également être utilisée en combinaison avec l'une des dispositions précédentes, indépendamment de la présence d'une deuxième ailette.

Avantageusement encore les ailettes comportent une face supérieure inclinée à partir du bord latéral inférieur. Cette disposition permet de soulever la pulpe et d'effectuer un meilleur brassage de la pulpe.

Avantageusement encore chacune des ailettes est issue d'une paroi prévue pour plonger dans le réceptacle. Les deux ailettes peuvent être issues de la même paroi ou de deux parois distinctes. L'entraînement de chacune des ailettes provient du sommet de la paroi ou des parois. Le réceptacle peut comporter une cheminée laissant passer les moyens d'entraînement en rotation des ailettes. Cette disposition permet d'immerger les ailettes dans la pulpe contenue dans le réceptacle en éliminant les difficultés de la protection de l'entraînement des ailettes.

Avantageusement alors, pour simplifier la construction, la ou les parois sont issues du cône de pressage.

Avantageusement encore les ailettes sont solidaires du cône de pressage. En alternative, les ailettes peuvent être indépendantes du cône de pressage.

Avantageusement encore le réceptacle présente une protubérance périphérique interne. Cette disposition permet de contrarier l'entraînement de la pulpe par les ailettes, et de favoriser un meilleur brassage de la pulpe. En alternative, le réceptacle pourrait par exemple comporter un axe entraîneur rotatif étanche, prévu pour recevoir une pièce supportant les ailettes.

Avantageusement encore le réceptacle présente un bord périphérique relevé.

Cette disposition permet de favoriser le recyclage de la pulpe sur les pales.

Avantageusement encore le réceptacle présente une partie centrale relevée. Cette disposition permet une immersion des ailettes dans la pulpe contenue dans le réceptacle, en éliminant les difficultés de la protection de l'entraînement des ailettes.

Avantageusement encore le réceptacle forme un tamis. Cette disposition permet de séparer le jus de la pulpe.

Avantageusement alors le tamis comporte des perforations présentant une ouverture minimale comprise entre 2 et 3 mm. Cette disposition permet de retenir la plupart des pépins tout en évitant le colmatage du tamis par la pulpe.

Les buts de l'invention sont atteints aussi avec un presse-fruits comportant une base logeant un moteur, un réceptacle, deux ailettes entraînées en rotation dans le réceptacle par le moteur, et un cône de pressage disposé au dessus des ailettes et entraîné en rotation par le moteur, du fait que le réceptacle, les ailettes et le cône de pressage appartiennent à un dispositif de pressage rotatif pour fruits selon l'une des dispositions précédentes.

Avantageusement alors le réceptacle est disposé sur un élément de collecte de jus. De préférence alors, le réceptacle forme un tamis.

Avantageusement encore le moteur est susceptible de tourner dans les deux sens de rotation. Cette disposition est commune dans les presse-fruits électriques. Notamment le moteur peut être un moteur synchrone.

Les buts de l'invention sont atteints aussi avec un cône de pressage rotatif comportant deux ailettes agencées en dessous d'une surface de pressage, l'une au moins des ailettes comportant un bord latéral inférieur prolongé par une face supérieure s'élevant à partir dudit bord latéral inférieur, du fait qu'au moins l'autre ailette comporte un bord latéral supérieur prolongé par une face inférieure s'abaissant à partir dudit bord latéral supérieur, et que le bord latéral inférieur et le bord latéral supérieur sont susceptibles de former ensemble des bords d'attaque lors d'une rotation des ailettes.

Un cône de pressage usuel d'un presse-fruits peut ainsi être remplacé par un cône de pressage selon l'invention permettant d'améliorer l'extraction du jus.

L'invention sera mieux comprise à l'étude d'un exemple de réalisation et de variantes, pris à titre nullement limitatif, illustrés dans les figures annexées, dans lesquelles :
- la figure 1 est une vue d'un exemple de réalisation d'un presse-fruits comportant un dispositif de pressage rotatif selon l'invention, avec deux cônes de pressage interchangeables,
- la figure 2 est une vue en perspective de dessus du presse-fruits illustré à la figure 1, avec l'un des cônes de pressage.
- la figure 3 est une vue en perspective de l'un des cônes de pressage,
- la figure 4 est une vue en coupe verticale du presse-fruits illustré aux figures 1 et 2 selon une première orientation parallèle aux ailettes du cône de pressage,
- la figure 5 est une vue en coupe verticale du presse-fruits illustré aux figures 1, 2 et 4 selon une orientation perpendiculaire à celle de la figure 4.
- la figure 6 est une vue en perspective d'une variante de réalisation d'un cône de pressage.
- la figure 7 est une vue en perspective d'une autre variante de réalisation d'un cône de pressage.
- la figure 8 est une vue latérale d'une autre variante d'un dispositif de pressage selon l'invention comportant deux ailettes, dans lequel seule l'une des ailettes est représentée.
- la figure 9 est une vue latérale de la face opposée du dispositif de pressage selon l'invention représenté à la figure 8, dans lequel seule l'autre ailette est représentée.

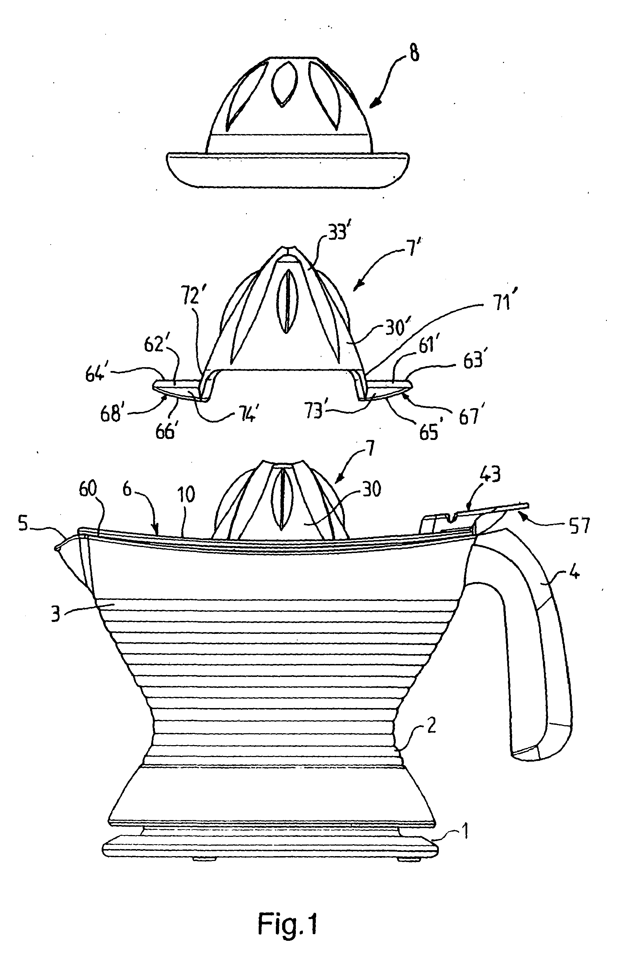

La figure 1 montre un presse-fruits électrique comportant une base 1, un élément de collecte de jus 2 formant un récipient 3 muni d'une poignée 4 et d'un bec verseur 5, un élément de collecte de pulpe 6, un cône de pressage 7, un autre cône de pressage 7', et un couvercle de pressage 8.

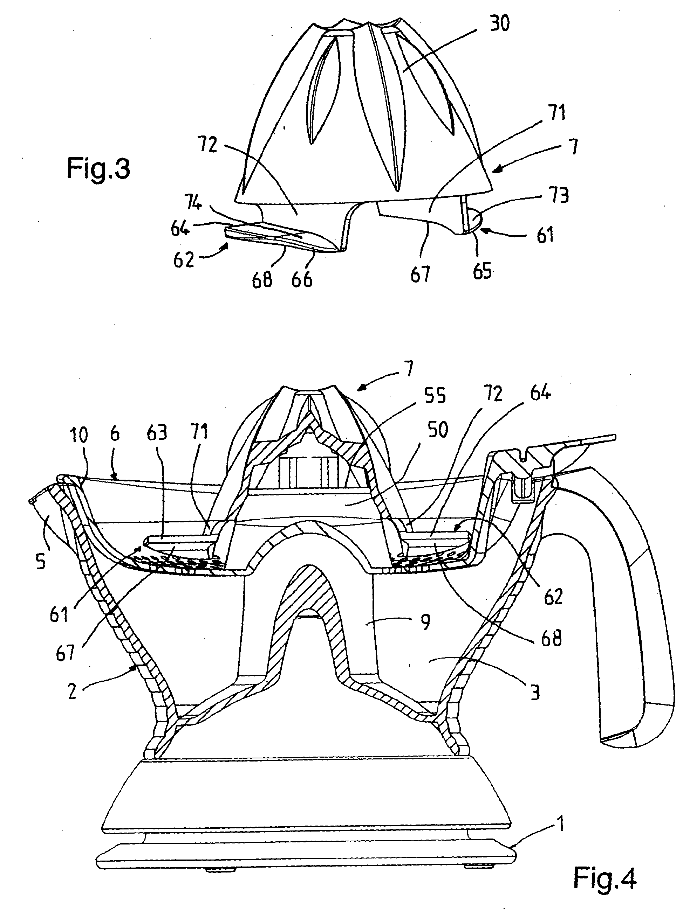

L'élément de collecte de jus 2 est avantageusement amovible de la base 1. L'élément de collecte de pulpe 6 est disposé sur l'élément de collecte de jus 2. Plus particulièrement, l'élément de collecte de pulpe 6 repose sur une cheminée 9 de l'élément de collecte de jus 2, mieux visible sur la figure 4.

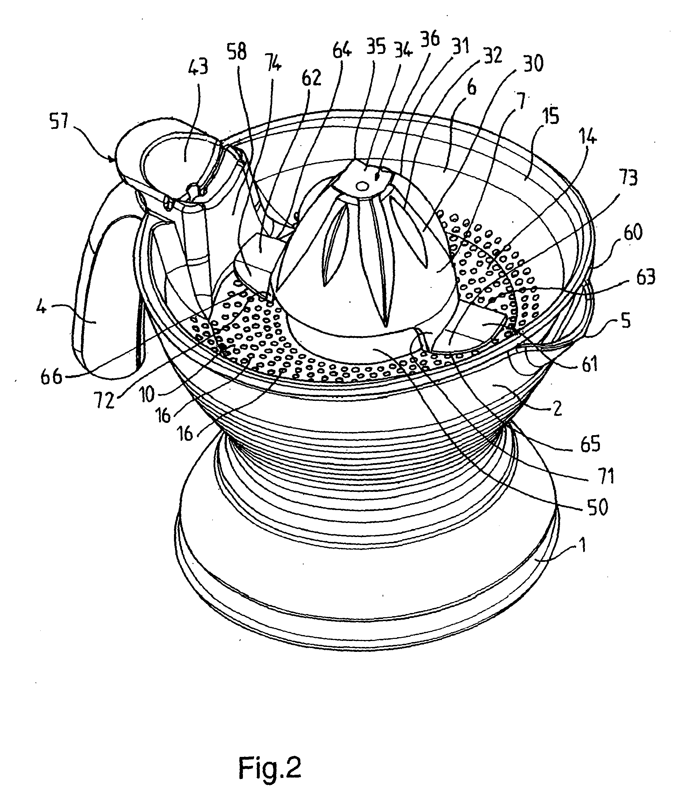

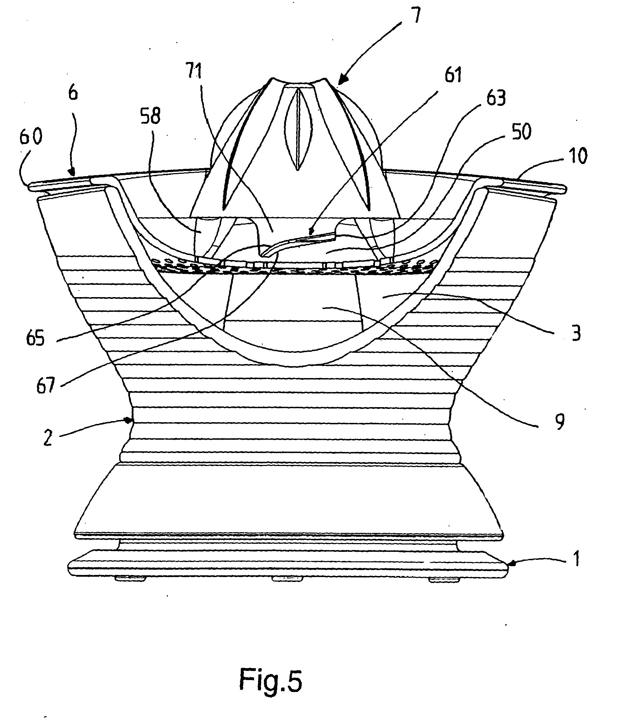

L'élément de collecte de pulpe 6 forme un réceptacle 10, mieux visible sur les figures 2, 4 et 5. Le réceptacle 10 présente une forme annulaire. Le réceptacle 10 présente un bord périphérique 15 relevé. Un arrondi relie le fond et la paroi latérale du réceptacle 10. Toutefois le réceptacle 10 présente une protubérance périphérique interne 58 issue du bord périphérique 15. Le réceptacle 10 présente une partie centrale 50 relevée, prévue pour reposer sur la cheminée 9 de l'élément de collecte de jus 2. Le réceptacle 10 présente un rebord annulaire 60 prévu pour reposer sur l'élément de collecte de jus 2. Le réceptacle 10 présente une ouverture centrale 55 prévue pour le passage d'un axe d'entraînement du presse-fruits. La partie centrale 50 entoure l'ouverture centrale 55. La cheminée 9 et la partie centrale 50 présentent une forme non circulaire, pour orienter la position de l'élément de collecte de pulpe 6 sur l'élément de collecte de jus 2.

L'élément de collecte de pulpe 6 comporte un tamis 14, mieux visible aux figures 2, 4 et 5. Le réceptacle 10 forme le tamis 14. Le tamis 14 présente une série de perforations 16 présentant une ouverture minimale comprise entre 2 et 3 mm, par exemple 2,5 mm. Les perforations 16 sont de préférence circulaires.

L'élément de collecte de pulpe 6 comporte un moyen de préhension 57. Une zone de réception 43 d'un fruit à découper est agencée en bordure du réceptacle 10. Le moyen de préhension 57 prolonge la zone de réception 43 vers la périphérie, tel qu'illustré aux figures 1, 2 et 4. Tel que bien visible sur la figure 2, la protubérance périphérique interne 58 est issue du bord périphérique 15 au dessous de la zone de réception 43.

Le cône de pressage 7 et le cône de pressage 7' sont prévus pour être mis en place dans le réceptacle 10 et pour être entraînés en rotation par un moteur agencé dans la base 1. Le moteur, non représenté aux figures, est avantageusement susceptible de tourner dans les deux sens de rotation. Le moteur est par exemple un moteur synchrone. Le moteur entraîne un axe d'entraînement par l'intermédiaire d'un réducteur, non représentés aux figures. L'axe d'entraînement est logé dans la cheminée 9. Le cône de pressage 7 ou le cône de pressage 7' est monté sur l'axe d'entraînement.

Le cône de pressage 7 est plus particulièrement dédié aux tomates. Le cône de pressage 7 comporte une surface de pressage 30 présentant des conformations 31, 32 en relief. La surface de pressage 30 présente une partie supérieure 34 comprenant des dents 35 s'élevant en périphérie d'une zone centrale 36. La zone centrale 36 est avantageusement concave.

Le cône de pressage 7' est plus particulièrement destiné aux agrumes. Le cône de pressage 7' comporte une surface de pressage 30' présentant des nervures 33' se rejoignant à leur sommet.

Le cône de pressage 7 et le cône de pressage 7' comportent à leur base deux ailettes 61, 62 ; 61', 62' prévues pour le brassage de la pulpe et l'extraction du jus à partir de la pulpe. Le cône de pressage 7 et le cône de pressage 7' sont prévus pour être disposés au-dessus des ailettes 61, 62 ; 61', 62'. Les ailettes 61, 62 ; 61', 62' sont solidaires des cônes de pressage 7 ; 7'. Les ailettes 61, 62 ; 61', 62' sont prévues pour être entraînées en rotation dans le réceptacle 10.

Les ailettes 61, 62 ; 61', 62' sont agencées avec une inclinaison transversale. Les inclinaisons des deux ailettes 61, 62 ; 61', 62' présentent des sens opposés. Ainsi les ailettes 61, 62 ; 61', 62' sont inclinées transversalement de manière opposée.

Les ailettes 61', 62' sont identiques aux ailettes 61, 62. Ainsi les ailettes 61, 62 ; 61', 62' présentent une symétrie miroir. Les ailettes 61, 62 ; 61', 62' sont disposées de manière opposée.

Les ailettes 61, 62 ; 61', 62' sont issues de parois 71, 72 ; 71', 72' prévues pour plonger dans le réceptacle 10. Les parois 71, 72 ; 71', 72' sont issues des cônes de pressage 7, 7'.

Chacune des ailettes 61, 62 ; 61', 62' présente un bord latéral supérieur 63, 64 ; 63', 64' et un bord latéral inférieur 65, 66 ; 65', 66'. Le bord latéral inférieur 65, 66 ; 65', 66' est relevé en direction de la périphérie. La distance entre le bord latéral inférieur 65, 66 ; 65', 66' et le fond du réceptacle 10 est avantageusement comprise entre 1,5 et 2,5 mm, et s'élève par exemple à 2 mm.

Les ailettes 61, 62 ; 61', 62' comportent une face inférieure 67, 68 ; 67', 68' présentant une inclinaison augmentant du bord latéral supérieur 63, 64 ; 63', 64' vers le bord latéral inférieur 65, 66 ; 65', 66'. Les ailettes 61, 62 ; 61', 62' comportent une face supérieure 73, 74 ; 73', 74' inclinée à partir du bord latéral inférieur 65, 66 ; 65', 66'. Tel que bien visible sur les figures, la face supérieure 73, 74 ; 73', 74' présente une inclinaison diminuant du bord latéral inférieur 65, 66 ; 65', 66' vers le bord latéral supérieur 63, 64 ; 63', 64'.

Ainsi, tel que bien visible au figures, le bord latéral inférieur 65, 66 ; 65', 66' des ailettes 61, 62 ; 61', 62' est prolongé par la face supérieure 73, 74 ; 73', 74' s'élevant à partir dudit bord latéral inférieur 65, 66 ; 65', 66', et le bord latéral supérieur 63, 64 ; 63', 64' des ailettes 61, 62 ; 61', 62' est prolongé par la face inférieure 67, 68 ; 67', 68' ; s'abaissant à partir dudit bord latéral supérieur 63, 64 ; 63', 64'.

Le fonctionnement du dispositif de pressage rotatif pour fruits du presse-fruits illustré aux figures 1 à 5 est le suivant.

L'utilisateur choisit le cône de pressage 7 ; 7' le plus adapté au fruit à presser et place ledit cône de pressage dans le réceptacle 10 sur l'axe d'entraînement du presse-fruits. Les ailettes 61, 62 du cône de pressage 7 associées au tamis 14 permettent l'obtention d'un jus de tomate plus pulpeux. Les ailettes 61', 62' du cône de pressage 7' associées au tamis 14 permettent d'obtenir un taux d'extraction important de jus d'agrumes malgré la taille réduite des perforations 16 du tamis 14.

Si désiré l'utilisateur peut maintenir le demi-fruit placé sur le cône de pressage 7 ; 7' à l'aide du couvercle 8.

Le moteur entraîne le cône de pressage 7 ou 7' placé dans le réservoir 10 dans l'un ou l'autre des sens de rotation.

L'ailette 61 ; 61' ou 62 ; 62' inclinée vers le bas par rapport au sens de rotation permet de brasser la pulpe, de faciliter l'écoulement du jus hors de la pulpe, et d'éviter le colmatage du tamis 14. Le bord latéral inférieur 65 ; 65' ou 66 ; 66' forme alors un bord d'attaque lors de la rotation de ladite ailette dans le réceptacle 10. La pulpe est soulevée par ledit bord latéral inférieur 65 ; 65' ou 66 ; 66' et passe sur la face supérieure 73, 73' ou 74, 74' de l'ailette 61 ; 61' ou 62 ; 62' inclinée vers le bas par rapport au sens de rotation.

L'ailette 61 ; 61' ou 62 ; 62' inclinée vers le haut par rapport au sens de rotation permet de presser la pulpe et d'en extraire le jus. Ladite ailette permet aussi de faciliter le passage d'une partie de la pulpe dans l'élément de collecte de jus 2, notamment pour le jus de tomates. Le bord latéral supérieur 63 ; 63' ou 64 ; 64' forme alors un bord d'attaque lors de la rotation de ladite ailette dans le réceptacle 10. La pulpe se retrouvant sous le bord latéral supérieur 63 ; 63' ou 64 ; 64' est compressée par la face inférieure 73, 73' ou 74', 74' de l'ailette 61 ; 61' ou 62 ; 62' inclinée vers le haut par rapport au sens de rotation.

Le bord latéral supérieur 63 ; 63' et le bord latéral inférieur 65 ; 65' sont susceptibles de former ensemble des bords d'attaque lors d'une rotation des ailettes 61, 62 ; 61', 62' selon un sens de rotation. Le bord latéral supérieur 64 ; 64' et le bord latéral inférieur 66 ; 66' sont susceptibles de former ensemble des bords d'attaque lors d'une rotation des ailettes 61, 62 ; 61', 62' selon l'autre sens de rotation.

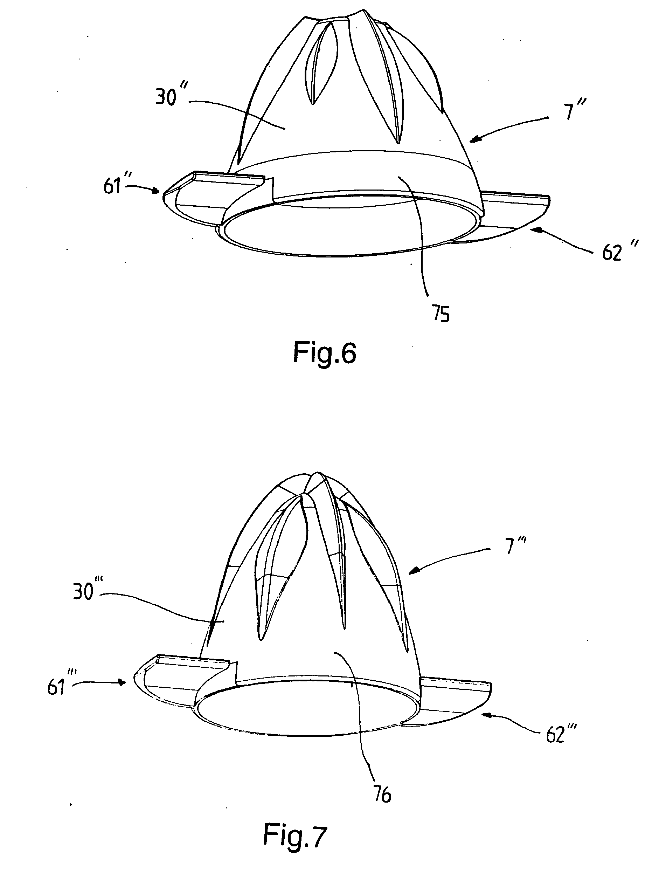

La figure 6 illustre un cône de pressage 7" différant du cône de pressage 7 représenté aux figures 1 à 5 en ce que les ailettes 61", 62" sont issues d'une paroi 75 s'étendant sous la surface de pressage 30". La paroi 75 est annulaire et prolonge la surface de pressage 30". La paroi 75 est prévue pour plonger dans le réceptacle 10.

La figure 7 illustre un cône de pressage 7"' différant du cône de pressage 7' représenté à la figure 1 en ce que les ailettes 61''', 62"' sont issues d'une paroi 76 s'étendant sous la surface de pressage 30"'. La paroi 76 est annulaire et prolonge la surface de pressage 30"'. La paroi 76 est prévue pour plonger dans le réceptacle 10.

A titre de variante, les ailettes ne sont pas nécessairement utilisables dans les deux sens de rotation.

A titre de variante les ailettes ne présentent pas nécessairement la même géométrie, notamment si l'entraînement des ailettes ne s'effectue que dans un seul sens.

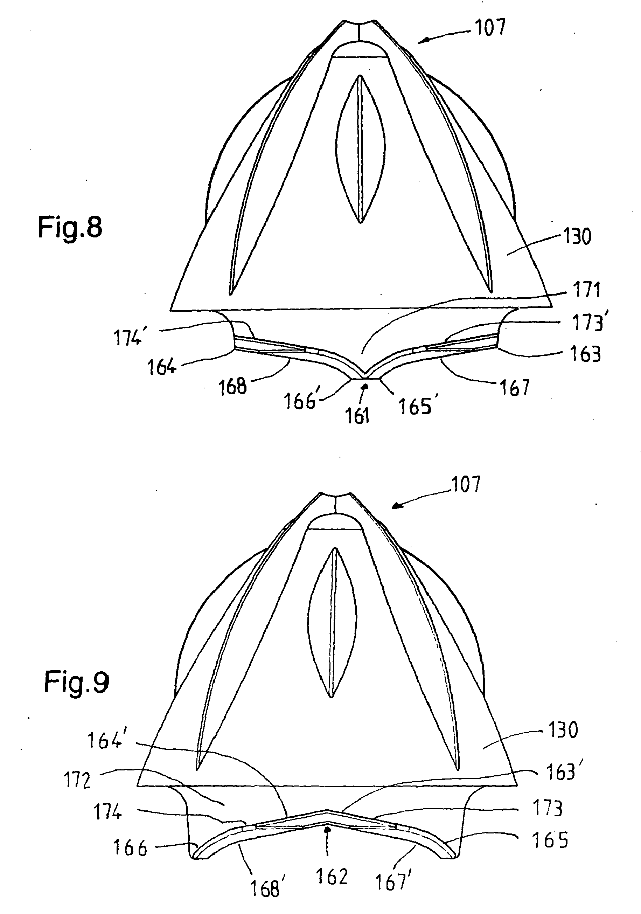

Les figures 8 et 9 illustrent un cône de pressage 107 différant du cône de pressage 7' en ce que la surface de pressage 130 est disposée au dessus de deux ailettes 161, 162 de géométrie différente. Chacune des ailettes 161, 162 est inclinée transversalement de manière opposée. Les ailettes 161, 162 sont disposées de manière opposée.

L'ailette 161 visible sur la figure 8 est destinée au pressage et comporte à cet effet un bord latéral supérieur 164 prolongé par une face inférieure 168 s'abaissant à partir dudit bord latéral supérieur 166. La face inférieure 168 présente une inclinaison augmentant du bord latéral supérieur 164 vers une partie inférieure 166' de l'ailette 161. L'ailette 161 comporte également un autre bord latéral supérieur 163 prolongé par une autre face inférieure 167 s'abaissant à partir dudit bord latéral supérieur 163. L'autre face inférieure 167 présente une inclinaison augmentant du bord latéral supérieur 163 vers une partie inférieure 165' de l'ailette 161. L'ailette 161 présente une face supérieure 174' disposée au dessus de la face inférieure 168 et une autre face supérieure 173' disposée au dessus de l'autre face inférieure 167. L'ailette 161 est agencée sur une paroi 171 issue du cône de pressage 107. L'ailette 161 est réversible et présente avantageusement une symétrie miroir.

L'ailette 162 visible sur la figure 9 est destinée au brassage et comporte à cet effet un bord latéral inférieur 166 prolongé par une face supérieure 174 s'élevant à partir dudit bord latéral inférieur 166. La face supérieure 174 présente une inclinaison diminuant du bord latéral inférieur 166 vers une partie supérieure 164' de l'ailette 162. L'ailette 162 comporte également un autre bord latéral inférieur 165 prolongé par une autre face supérieure 173 s'élevant à partir dudit bord latéral inférieur 165. L'autre face supérieure 173 présente une inclinaison diminuant du bord latéral inférieur 165 vers une partie supérieure 163' de l'ailette 162. Les bords latéraux inférieurs 165, 166 sont relevés en direction de la périphérie. L'ailette 162 présente une face inférieure 174' disposée au dessus de la face inférieure 168 et une autre face supérieure 173' disposée au dessus de l'autre face inférieure 167. L'ailette 162 est agencée sur une paroi 172 issue du cône de pressage 107. L'ailette 162 est réversible et présente avantageusement une symétrie miroir.

Ainsi, quel que soit le sens de rotation du cône de pressage 107, l'ailette 161 sert au pressage et l'ailette 162 sert au brassage. Les bords latéraux supérieurs 163, 164 et les bords latéraux inférieurs 165, 166 sont susceptibles de former ensemble des bords d'attaque lors d'une rotation des ailettes 161, 162.

A titre de variante les ailettes ne sont pas nécessairement implantées de manière opposée ; le dispositif de pressage peut comporter plus de deux ailettes. Toutefois un passage est nécessaire entre deux ailettes adjacentes, pour permettre le brassage et/ou le pressage de la pulpe.

A titre de variante, les ailettes ne sont pas nécessairement solidaires du cône de pressage. Les ailettes peuvent être par exemple solidaires d'une pièce montée entre l'axe d'entraînement et le cône de pressage. Un ou plusieurs jeux d'ailettes peuvent alors être envisagés avec le ou les cônes de pressage.

A titre de variante, le dispositif de pressage rotatif pour fruits selon l'invention peut ne comporter qu'une ailette de pressage comportant une face inférieure présentant une inclinaison augmentant du bord latéral supérieur vers le bord latéral inférieur. Le bord latéral supérieur forme alors un bord d'attaque lors de la rotation de l'ailette.

A titre de variante, le dispositif de pressage rotatif pour fruits selon l'invention peut ne comporter qu'une ailette de pressage réversible comportant deux faces inférieures présentant une inclinaison depuis deux bords latéraux supérieurs en vers une ou deux parties inférieures.

A titre de variante complémentaire, le dispositif de pressage rotatif pour fruits selon l'invention peut comporter alors une autre ailette, prévue pour le raclage, présentant une face inférieure non nécessairement inclinée.

A titre de variante complémentaire, le dispositif de pressage rotatif pour fruits selon l'invention peut comporter alors une autre ailette, prévue pour le raclage ou le brassage, présentant une face supérieure s'élevant à partir d'un bord latéral inférieur.

A titre de variante complémentaire, le dispositif de pressage rotatif pour fruits selon l'invention peut comporter alors une autre ailette réversible, prévue pour le raclage ou le brassage, présentant deux faces supérieures s'élevant à partir de deux bord latéraux inférieurs.

A titre de variante, le dispositif de pressage rotatif pour fruits selon l'invention peut être utilisé avec un appareil électroménager de préparation culinaire autre qu'un presse-fruits électrique, par exemple un robot ménager multifonctions.

La présente invention n'est nullement limitée à l'exemple de réalisation décrit et à ses variantes, mais englobe de nombreuses modifications dans le cadre des revendications.

## Revendications

1. Dispositif de pressage rotatif pour fruits, comportant un réceptacle (10), deux ailettes (61, 62 ; 61', 62' ; 61 ", 62" ; 61"', 62"' ; 161, 162) prévues pour être entraînées en rotation dans le réceptacle (10), et un cône de pressage (7 ; 7' ; 7" ; 7"' ; 107) prévu pour être disposé au dessus des ailettes (61, 62 ; 61', 62' ; 61", 62" ; 61"', 62"' ; 161, 162) et pour être entraîné en rotation, l'une au moins des ailettes (61, 62 ; 61', 62' ; 61", 62" ; 61"', 62"', 162) comportant un bord latéral inférieur (65, 66 ; 65', 66' ; 165, 166) prolongé par une face supérieure (73, 74 ; 73', 74' ; 173, 174) s'élevant à partir dudit bord latéral inférieur (65, 66 ; 65', 66' ; 165, 166), **caractérisé en ce qu'**au moins l'autre ailette (61, 62 ; 61', 62' ; 61", 62" ; 61"', 62"', 161) comporte un bord latéral supérieur (63, 64 ; 63', 64' ; 163, 164) prolongé par une face inférieure (67, 68 ; 67', 68' ; 167, 168) s'abaissant à partir dudit bord latéral supérieur (63, 64 ; 63', 64' ; 163, 164) et **en ce que** le bord latéral inférieur (65, 66 ; 65', 66' ; 165, 166) et le bord latéral supérieur (63, 64 ; 63', 64' ; 163, 164) sont susceptibles de former ensemble des bords d'attaque lors d'une rotation des ailettes (61, 62 ; 61', 62' ; 61 ", 62" ; 61''', 62"' ; 161, 162).

2. Dispositif de pressage rotatif pour fruits selon la revendication 1, **caractérisé en ce que** les ailettes (61, 62 ; 61', 62' ; 61", 62" ; 61"', 62"' ; 161, 162) sont inclinées transversalement de manière opposée.

3. Dispositif de pressage rotatif pour fruits selon l'une des revendications 1 ou 2, **caractérisé en ce que** les ailettes (61, 62 ; 61', 62' ; 61", 62" ; 61"', 62"') présentent une symétrie miroir.

4. Dispositif de pressage rotatif pour fruits selon l'une des revendications 1 à 3, **caractérisé en ce que** les ailettes (61, 62 ; 61', 62' ; 61", 62" ; 61"', 62"' ; 161, 162) sont disposées de manière opposée.

5. Dispositif de pressage rotatif pour fruits selon l'une des revendications 1 à 4, **caractérisé en ce que** les ailettes (61, 62 ; 61', 62' ; 61", 62" ; 61"', 62"') sont inclinées transversalement de manière opposée l'une par rapport à l'autre et **en ce que** chacune des ailettes (61, 62 ; 61', 62' ; 61 ", 62" ; 61"', 62"') présente un bord latéral supérieur (63, 64 ; 63', 64') et un bord latéral inférieur (65, 66 ; 65', 66').

6. Dispositif de pressage rotatif pour fruits selon l'une des revendications 1 à 5, **caractérisé en ce que** la face inférieure (67, 68 ; 67', 68' ; 167, 168) présente une inclinaison augmentant du bord latéral supérieur (63, 64 ; 63', 64') vers le bord latéral inférieur (65, 66 ; 65', 66') ou vers une partie inférieure (165', 166') de l'autre ailette (161).

7. Dispositif de pressage rotatif pour fruits selon l'une des revendications 1 à 6, **caractérisé en ce que** le bord latéral inférieur (65, 66 ; 65', 66' ; 165, 166) est relevé en direction de la périphérie.

8. Dispositif de pressage rotatif pour fruits selon l'une des revendications 1 à 7, **caractérisé en ce que** la distance entre le bord latéral inférieur (65, 66 ; 65', 66' ; 165, 166) et le fond du réceptacle (10) est comprise entre 1,5 et 2,5 mm.

9. Dispositif de pressage rotatif pour fruits selon l'une des revendications 1 à 8, **caractérisé en ce que** les ailettes (61, 62 ; 61', 62' ; 162) comportent une face supérieure (73, 74 ; 73', 74' ; 173, 174) inclinée à partir du bord latéral inférieur (65, 66 ; 65', 66' ; 165, 166).

10. Dispositif de pressage rotatif pour fruits selon l'une des revendications 1 à 9, **caractérisé en ce que** chacune des ailettes (61, 62 ; 61', 62' ; 61", 62" ; 61"', 62"' ; 161, 162) est issue d'une paroi (71, 72 ; 71', 72' ; 75 ; 76 ; 171, 172) prévue pour plonger dans le réceptacle (10).

11. Dispositif de pressage rotatif pour fruits selon la revendication 10, **caractérisé en ce que** la ou les parois (71, 72 ; 71', 72' ; 75 ; 76 ; 171, 172) sont issues du cône de pressage (7 ; 7' ; 7" ; 7"' ; 107).

12. Dispositif de pressage rotatif pour fruits selon l'une des revendications 1 à 11, **caractérisé en ce que** les ailettes (61, 62 ; 61', 62' ; 61 ", 62" ; 61"', 62"' ; 161, 162) sont solidaires du cône de pressage (7 ; 7' ; 7" ; 7"' ; 107).

13. Dispositif de pressage rotatif pour fruits selon l'une des revendications 1 à 12, **caractérisé en ce que** le réceptacle (10) présente une protubérance périphérique interne (58).

14. Dispositif de pressage rotatif pour fruits selon l'une des revendications 1 à 13, **caractérisé en ce que** le réceptacle (10) présente un bord périphérique (15) relevé.

15. Dispositif de pressage rotatif pour fruits selon l'une des revendications 1 à 14, **caractérisé en ce que** le réceptacle (10) présente une partie centrale (50) relevée.

16. Dispositif de pressage rotatif pour fruits selon l'une des revendications 1 à 15, **caractérisé en ce que** le réceptacle (10) forme un tamis (14).

17. Dispositif de pressage rotatif pour fruits selon la revendication 16, **caractérisé en ce que** le tamis (14) comporte des perforations (16) présentant une ouverture minimale comprise entre 2 et 3 mm.

18. Presse-fruits comportant une base (1) logeant un moteur, un réceptacle (10), deux ailettes (61, 62 ; 61', 62' ; 61", 62" ; 61"', 62"' ; 161, 162) entraînées en rotation dans le réceptacle (10) par le moteur, et un cône de pressage (7 ; 7' ; 7" ; 7"' ; 107) disposé au dessus des ailettes (61, 62 ; 61', 62' ; 61", 62" ; 61"', 62"' ; 161, 162) et entraîné en rotation par le moteur, **caractérisé en ce que** le réceptacle (10), les ailettes (61, 62 ; 61', 62' ; 61", 62" ; 61"', 62"' ; 161, 162) et le cône de pressage (7 ; 7' ; 7" ; 7"' ; 107) appartiennent à un dispositif de pressage rotatif pour fruits selon l'une des revendications 1 à 17.

19. Presse-fruits selon la revendication 18, **caractérisé en ce que** le réceptacle (10) est disposé sur un élément de collecte de jus (2).

20. Presse-fruits selon l'une des revendications 18 ou 19, **caractérisé en ce que** le moteur est susceptible de tourner dans les deux sens de rotation.

21. Presse-fruits selon la revendication 20, **caractérisé en ce que** le moteur est un moteur synchrone.

22. Cône de pressage (7 ; 7' ; 7" ; 7"' ; 107) rotatif comportant deux ailettes (61, 62 ; 61', 62' ; 61", 62" ; 61"', 62"' ; 161, 162) agencées en dessous d'une surface de pressage (30 ; 30' ; 30" ; 30"', 130), l'une au moins des ailettes (61, 62 ; 61', 62' ; 61", 62" ; 61''', 62"', 162) comportant un bord latéral inférieur (65, 66 ; 65', 66' ; 165, 166) prolongé par une face supérieure (73, 74 ; 73', 74' ; 173, 174) s'élevant à partir dudit bord latéral inférieur (65, 66 ; 65', 66' ; 165, 166), **caractérisé en ce qu'**au moins l'autre ailette (61, 62; 61', 62'; 61", 62"; 61"', 62"', 161) comporte un bord latéral supérieur (63, 64 ; 63', 64' ; 163, 164) prolongé par une face inférieure (67, 68 ; 67', 68' ; 167, 168) s'abaissant à partir dudit bord latéral supérieur (63, 64 ; 63', 64' ; 163, 164) et **en ce que** le bord latéral inférieur (65, 66 ; 65', 66' ; 165, 166) et le bord latéral supérieur (63, 64 ; 63', 64' ; 163, 164) sont susceptibles de former ensemble des bords d'attaque lors d'une rotation des ailettes (61, 62 ; 61', 62' ; 61", 62" ; 61"', 62"'; 161, 162).
